(19) Europäisches Patentamt
European Patent Office
Office européen des brevets

(11) **EP 3 388 976 B1**

(12) **FASCICULE DE BREVET EUROPEEN**

(45) Date de publication et mention de la délivrance du brevet:
**01.03.2023 Bulletin 2023/09**

(21) Numéro de dépôt: **18166590.2**

(22) Date de dépôt: **10.04.2018**

(51) Classification Internationale des Brevets (IPC):
***G06V 40/12*** *(2022.01)*

(52) Classification Coopérative des Brevets (CPC):
**G06V 40/1394**

(54) **PROCEDE DE DETECTION DE FRAUDE**

BETRUGSERKENNUNGSVERFAHREN

METHOD FOR DETECTING FRAUD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.04.2017 FR 1753180**

(43) Date de publication de la demande:
**17.10.2018 Bulletin 2018/42**

(73) Titulaire: **Idemia Identity & Security France 92400 Courbevoie (FR)**

(72) Inventeurs:
• **FOURRE, Joël-Yann**
**92130 Issy Les Moulineaux (FR)**
• **BEAUDET, Jean**
**92130 Issy Les Moulineaux (FR)**

(74) Mandataire: **Idemia**
**2, place Samuel de Champlain**
**92400 Courbevoie (FR)**

(56) Documents cités:
**EP-A1- 2 495 697     WO-A1-2015/091701**

## Description

L'invention concerne un procédé de détection de fraude lors d'une utilisation d'un dispositif de capture d'une empreinte d'une partie corporelle utilisant un principe de réflexion totale à fond sombre.

## Contexte de l'invention

L'utilisation d'empreintes digitales, par exemple du type empreinte d'un doigt, d'une pluralité de doigts, d'une paume de main, permet de sécuriser des accès à des bâtiments ou à des machines. Utiliser cette technologie permet de renforcer la sécurité dans la mesure où la probabilité que deux personnes aient deux empreintes digitales identiques est quasiment nulle.

Un dispositif de capture d'une empreinte digitale permet de capturer une image d'une empreinte digitale. Dans le cas d'une identification, cette empreinte est comparée avec un ensemble d'empreintes digitales de référence contenues dans une base de données. Dans le cas d'une authentification, cette empreinte est comparée à une seule empreinte digitale. La comparaison permet de déterminer si l'empreinte digitale capturée appartient ou non à une personne référencée dans la base de données ou si la personne est bien celle qu'elle prétend être. Certains individus mal intentionnés tentent de se faire identifier (respectivement authentifier) frauduleusement en utilisant des leurres afin d'induire en erreur des dispositifs d'identification (respectivement d'authentification).

Différents procédés de validation sont connus pour valider le fait que la peau présente devant le dispositif de capture d'une empreinte est vraie et donc que le doigt porteur de l'empreinte digitale est un vrai doigt.

Certains procédés connus reposent entièrement sur une analyse d'images notamment par identification des artefacts de réalisation de fraudes. Ces procédés ne sont cependant pas robustes aux fraudes soignées.

D'autres procédés sont également connus pour capturer une série d'images du doigt et pour mesurer par exemple la sudation, le pouls, l'oxymétrie, le blanchiment du doigt au cours de l'appui sur la surface de capture.

De tels procédés nécessitent toutefois un temps d'acquisition incompressible car lié à la vitesse d'évolution du phénomène observé ce qui dégrade l'ergonomie du capteur.

Le document FR3015728 décrit un procédé permettant de valider qu'un élément corporel tel qu'une surface inférieure d'un ou plusieurs doigts ou la paume d'une main est recouvert d'une vraie peau. Le principe consiste plus précisément à éclairer la surface de l'élément à l'aide d'une source lumineuse permettant de n'éclairer qu'une zone, dite zone éclairée, bien définie de l'élément et de conserver une zone sans illumination directe, dite zone de diffusion. Une image de ces deux zones est ensuite capturée et analysée pour en déduire que ledit élément est couvert d'une vraie peau ou d'une fausse peau. Dans un mode de réalisation de ce procédé, une zone d'analyse recouvrant la zone éclairée et la zone de diffusion est découpée en plusieurs zones de calcul. Une intensité lumineuse moyenne des pixels est ensuite calculée pour chaque zone de calcul, ce qui permet d'obtenir une courbe d'intensité lumineuse et une courbe du gradient d'intensité lumineuse en fonction de la distance de la zone de calcul à la limite de la zone éclairée et à comparer des caractéristiques de ces courbes à celles extraites de courbes de référence.

Dans la méthode précédente, seule les rayons lumineux issus de l'élément corporel résultant d'une diffusion dans l'élément corporel sont utilisés. La méthode s'en trouverait améliorée s'il était possible d'obtenir facilement une image de l'élément corporel ne représentant que des rayons lumineux issus d'une diffusion dans l'élément corporel.

Il est souhaitable de pallier ces inconvénients de l'état de la technique. Il est notamment souhaitable que ce procédé puisse être mis en oeuvre dans un temps admissible pour un utilisateur.

## EXPOSE DE L'INVENTION

Selon un premier aspect de l'invention, l'invention concerne le procédé de détection de fraude tel que défini dans la revendication 1.

De cette manière, la détection de fraude s'en trouve améliorée.

Selon un deuxième aspect de l'invention, l'invention concerne un dispositif comprenant des moyens pour mettre en oeuvre le procédé selon le premier aspect.

Selon un troisième aspect de l'invention, l'invention concerne un équipement comprenant un dispositif selon le deuxième aspect.

Selon un quatrième aspect, l'invention concerne un programme d'ordinateur, comprenant des instructions pour mettre en oeuvre, par un dispositif, le procédé selon le premier aspect, lorsque ledit programme est exécuté par une unité de calcul dudit dispositif.

Selon un cinquième aspect non revendiqué, l'invention concerne des moyens de stockage, stockant un programme d'ordinateur comprenant des instructions pour mettre en oeuvre, par un dispositif, le procédé selon le premier aspect, lorsque ledit programme est exécuté par une unité de calcul dudit dispositif.

## BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un équipement comprenant un dispositif de capture d'une empreinte d'une partie corporelle selon l'invention ;

- la Fig. 2 illustre schématiquement un premier mode de réalisation d'un dispositif de capture d'une empreinte d'une partie corporelle;
- la Fig. 3 illustre schématiquement une sous-partie vue de face d'un capteur sensible à la lumière adapté pour le premier mode de réalisation du dispositif de capture d'une empreinte d'une partie corporelle;
- la Fig. 4A illustre schématiquement un deuxième mode de réalisation du dispositif de capture d'une empreinte d'une partie corporelle;
- la Fig. 4B illustre schématiquement un fonctionnement du deuxième mode de réalisation du dispositif de capture d'une empreinte d'une partie corporelle ;
- la Fig. 4C illustre schématiquement une sous-partie vue de face d'un capteur adapté au deuxième mode de réalisation du dispositif de capture d'une empreinte d'une partie corporelle;
- la Fig. 5 décrit schématiquement un dispositif de capture d'une empreinte digitale de l'art antérieur travaillant en réflexion totale fonctionnant en en fond sombre ;
- la Fig. 6 décrit un procédé de détection de fraude selon l'invention ; et,
- La Fig. 7 illustre schématiquement un exemple d'architecture matérielle d'un module de traitement mettant en oeuvre le procédé de détection de fraude

## DESCRIPTION DETAILLEE DE DIVERS MODES DE REALISATION

La description qui suit détaille plus particulièrement des modes de réalisation de la présente invention dans un contexte de téléphone intelligent (« smartphone » en terminologie anglo-saxonne). L'invention peut s'appliquer à d'autres équipements pouvant comprendre un dispositif de capture d'une empreinte d'une partie corporelle tel qu'un ordinateur, une tablette, un dispositif de contrôle d'entrée/sortie dans un bâtiment, etc. Par ailleurs, l'invention est décrite dans un contexte où la partie corporelle est un doigt. Elle s'applique toutefois à d'autres parties corporelles telles que plusieurs doigts, une paume de main, etc.

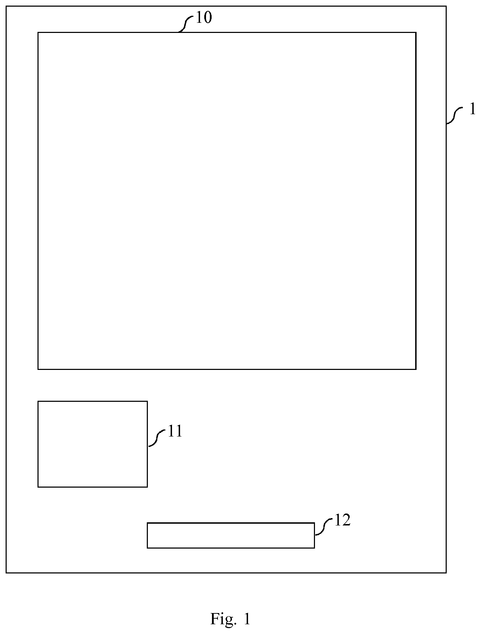

La Fig. 1 illustre schématiquement un équipement comprenant un dispositif de capture d'une empreinte d'une partie corporelle selon l'invention.

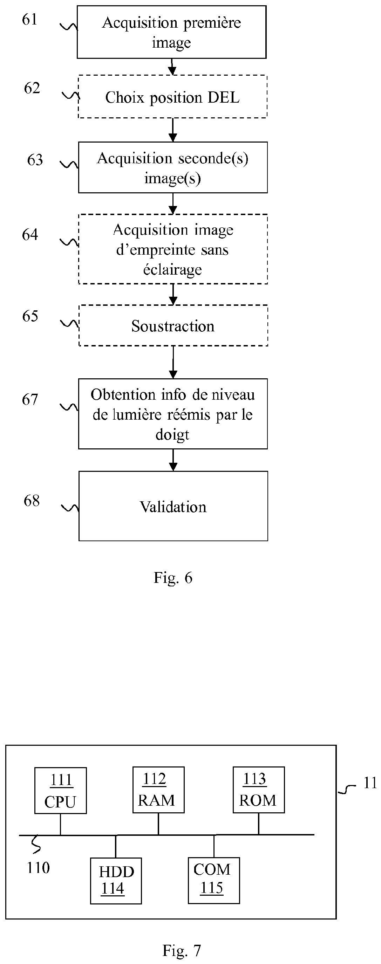

L'équipement 1 est ici un téléphone intelligent comprenant un écran 10, un module de traitement 11 et un dispositif de capture d'une empreinte d'une partie corporelle 12. Nous appelons par la suite le dispositif de capture d'une empreinte d'une partie corporelle *dispositif biométrique.* Le module de traitement 11 peut mettre en oeuvre plusieurs fonctionnalités de l'équipement 1 comprenant notamment des traitements des données issues du dispositif biométrique 12 comme nous le décrivons plus loin en relation avec la Fig. 6. Le dispositif biométrique 12 est par exemple utilisé par un propriétaire de l'équipement 1 pour s'authentifier auprès de l'équipement 1 et ainsi pouvoir l'utiliser.

Dans une mise en oeuvre particulière, le dispositif de capture d'une empreinte d'une partie corporelle 12 est intégré dans l'écran 10.

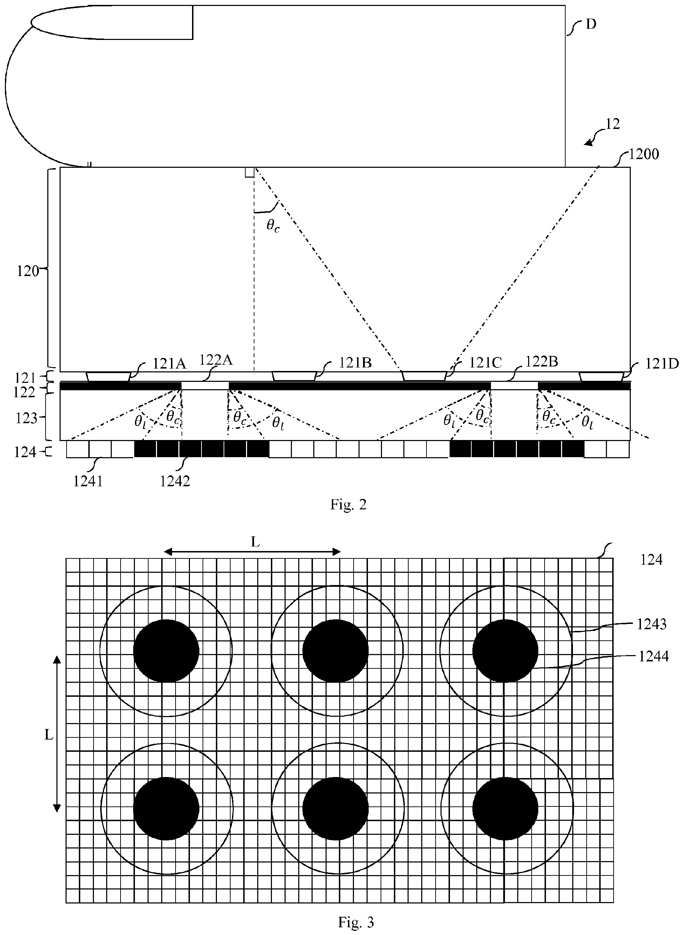

La Fig. 2 illustre schématiquement un premier mode de réalisation du dispositif biométrique 12 adapté pour mettre en oeuvre le procédé selon l'invention.

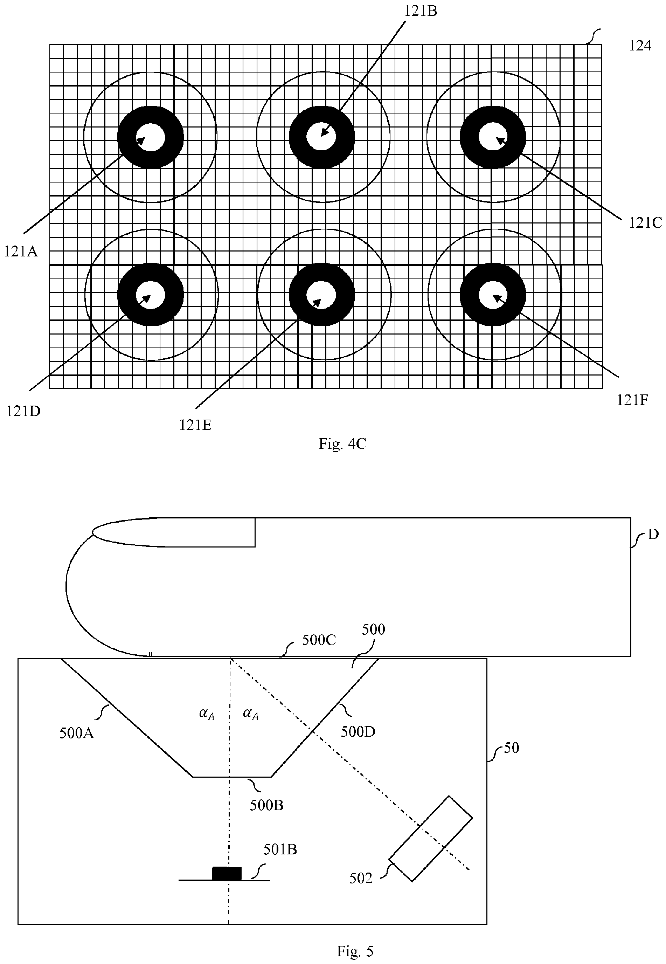

Le dispositif biométrique 12 utilise le principe de réflexion totale à fond sombre que nous rappelons ci-dessous en relation avec la Fig. 5.

La Fig. 5 décrit schématiquement un dispositif de capture d'une empreinte digitale travaillant en réflexion totale et fonctionnant en fond sombre.

Le dispositif 50 décrit en Fig. 5 comprend un prisme 500, une source lumineuse 501B, et un système optique 502 tel que par exemple un capteur CCD (Dispositif à transfert de charges, « Charge-Coupled Device ») ou CMOS (« Complementary Métal Oxide Semiconductor » en terminologie anglo-saxonne) et une ou plusieurs lentilles.

La source lumineuse 501B génère un faisceau lumineux qui traverse une première face 500B du prisme 500 jusqu'à une deuxième face 500C du prisme 500 où est positionné un doigt D. Le faisceau lumineux généré par la source lumineuse 501B forme un angle incident $\alpha_B$ avec la normale à la face 500C inférieur à un angle critique $\theta_c$ et à un angle limite $\theta_l$ (ici, l'angle incident $\alpha_B$ est de zéro degré). L'angle critique $\theta_c$ (resp. l'angle limite $\theta_l$) est défini comme l'angle au-delà duquel la réflexion totale se produit lorsqu'un faisceau atteint la face 500C quand le deuxième milieu est l'air (resp. quand le deuxième milieu est le doigt D). Le faisceau lumineux généré par la source 501B n'est donc pas réfléchi totalement par la face 500B.

Le système optique 502 reçoit le faisceau lumineux généré par la source 501B après diffusion par le doigt D. Le système optique 502 est configuré de sorte à recevoir des faisceaux lumineux après diffusion dans le doigt D formant un angle compris entre l'angle critique $\theta_c$ et l'angle limite $\theta_l$ avec la normale à la face 500C. Le système optique 502 ne reçoit donc que des faisceaux lumineux résultant d'une diffusion dans le doigt D mais aucun faisceau lumineux résultant d'une réflexion sur la face supérieure 500C. Le système optique 502 forme une image de l'empreinte digitale à fort contraste entre les vallées et les crêtes de l'empreinte digitale. Les crêtes correspondent à des faisceaux lumineux diffusés, en partie absorbés dans le doigt D et qui sont ressortis du doigt au niveau des crêtes en contact avec la face 500C pour atteindre le système optique 502. Aucun faisceau lumineux diffusé dans le doigt D et ressortant du doigt D au niveau des vallées ne peut atteindre le système optique 502 car ils ne peuvent traverser la couche d'air et ensuite se propager dans le prisme 500 tout en formant un angle par rapport à la normale à la face 500C supérieur à l'angle critique $\theta_c$. Les crêtes apparaissent donc plus lumineuses dans l'image d'empreinte que les vallées. On peut trouver un dispositif similaire dans le brevet français FR2757974.

L'angle critique $\theta_c$ est donné par la formule suivante :

$$\theta_c = arcsin\left(\frac{n_0}{n_1}\right)$$

$n_1$ étant l'indice de réfraction du prisme et $n_0$ étant l'indice de réfraction de l'air ou du doigt. Pour un indice de réfraction de l'air égal à « 1 » et un indice de réfraction du prisme égal à « 1.5 », on obtient un angle critique $\theta_c$ = 41.8 degrés. L'indice de réfraction de la peau est, dans le domaine du visible, compris entre « 1.41 » et « 1.47 ». En considérant la valeur minimale de « 1.41 », on obtient donc un angle limite $\theta_l$ de « 70 » degrés. En considérant la valeur maximale, on obtient un angle $\theta_l^{max}$ de « 76 » degrés.

De retour à la Fig. 2, le dispositif biométrique 12 comprend une pluralité d'éléments optiquement couplés comprenant :

- une première lame transparente 120 d'épaisseur $E_{120}$ comprenant une face supérieure 1200 sur laquelle peut reposer la partie corporelle (ici le doigt D) portant l'empreinte digitale à imager ;
- une source lumineuse 121 adaptée pour éclairer le doigt D composée ici de DEL. Quatre DEL 121A, 121B, 121C et 121D sont représentées dans la Fig. 2 ;
- un écran opaque à la lumière 122 situé en dessous de la première lame transparente 120 ;
- une deuxième lame transparente 123 d'épaisseur $E_{123}$ située en dessous de l'écran opaque 122 ;
- un capteur 124 comprenant des photorécepteurs sensibles à la lumière situé en dessous de la deuxième lame transparente 123.

Les lames transparentes 120 et 123 ont un indice de réfraction supérieur à un indice de réfraction minimum prédéfini $n_{min}$ supérieur à l'indice de réfraction de l'air.

Dans une mise en oeuvre particulière, cet indice de réfraction minimum $n_{min}$ est supérieur à l'indice de réfraction du doigt, plus particulièrement supérieur à 1,47. Il est connu en effet que lorsque l'indice de réfraction d'au moins la deuxième lame 123 est supérieur à l'indice de réfraction du doigt, l'image du doigt est d'étendue finie.

Dans la suite de l'exposé, pour simplifier, nous supposons que les deux lames transparentes 120 et 123 ont un indice de réfraction identique et par exemple égal à « 1.5 ».

Il faut comprendre par optiquement couplé qu'un rayon allant de la face supérieure de la première lame à la face inférieure de la seconde lame ne traverse aucun milieu d'indice inférieur à $n_{min}$. Ceci peut se faire dans le cas de deux lames de verre par exemple par collage des deux lames avec une colle d'indice de réfraction suffisant.

Les faces des lames transparentes 120 et 123, l'écran opaque 122 et le capteur 124 sont parallèles. Ici, l'écran opaque 122 et le capteur 124 sont considérés comme des lames d'épaisseur inférieure à l'épaisseur des deux lames transparentes 120 et 123.

Chaque DEL de la source lumineuse 121 est adaptée pour générer un faisceau lumineux au-dessus de l'écran opaque 122 en direction de la face supérieure 1200. Chaque DEL est configurée de telle sorte que chaque rayon lumineux émanant de cette DEL ait un angle incident par rapport à la normale à la face supérieure 1200 faible et dans tous les cas inférieur à l'angle critique $\theta_c$. De cette manière, aucun rayon lumineux émanant d'une DEL de la source lumineuse 121 ne subit de réflexion totale sur la face supérieure 1200. Avec une telle configuration de la source lumineuse 121, toute la surface du doigt D en regard de la face 1200 n'est pas éclairée directement. Seules des zones, dites zones éclairées, de dimensions restreintes (*i.e.* quasi ponctuelles) et bien définies sont éclairées directement par chaque DEL. Pour que l'ensemble du doigt D en regard de la face supérieure 1200 renvoie de la lumière, les DEL de la source lumineuse 121 sont configurées de telle sorte que chaque DEL et la ou les DEL qui sont les plus proches voisines de ladite DEL génèrent sur le doigt D des parties éclairées directement par les DEL distantes d'une distance $\delta$ inférieure à une distance prédéfinie $d_p$, caractéristique d'une profondeur de pénétration de la lumière dans le doigt D. La distance $\delta$ est la distance minimale entre deux frontières de parties éclairées. La distance prédéfinie $d_p$ varie d'environ un millimètre pour la lumière bleue à quelques centimètres pour la lumière infrarouge. Le capteur 124 reçoit donc des faisceaux lumineux issus d'une diffusion par le doigt D des rayons lumineux produits par la source lumineuse 121. Le dispositif biométrique 12 est donc *un dispositif de capture d'une empreinte digitale travaillant en réflexion totale à fond sombre*.

L'écran opaque 122 est une couche mince qui peut être réalisée par exemple par impression ou par dépôt d'un revêtement opaque sur la lame 123. L'écran opaque 122 n'est toutefois pas totalement opaque puisqu'il est composé d'un réseau de trous. Chaque rayon de lumière dirigé vers le capteur 124 qui atteint l'écran opaque 122 au niveau d'un trou traverse l'écran opaque 122 et atteint le capteur 124.

Dans une mise en oeuvre particulière, l'écran opaque 122 est une couche mince qui peut être réalisée par impression ou par dépôt d'un revêtement absorbant sur la face supérieure de la lame transparente 123 ou sur la face inférieure de la lame transparente 120 tel qu'un dépôt métallique. Chaque trou de l'écran opaque 122 est rempli d'une matière ayant un indice de réfraction supérieur à l'indice de réfraction minimum prédéfini $n_{min}$.

Le capteur 124 est par exemple un capteur CCD ou un capteur CMOS composé d'une matrice de photorécepteurs (tels que le photorécepteur 1241) sensibles à la longueur d'onde (ou aux longueurs d'ondes) des faisceaux lumineux émis par la source lumineuse 121. Le capteur 124 est optiquement couplé à la lame 123. Le capteur 124 reçoit de la lumière passant par les trous de l'écran opaque 122 et génère des informations à partir de la lumière reçue qui sont utilisées par le module de traitement 11 pour produire une image d'empreinte. L'image d'empreinte ainsi produite est composée d'une matrice de pixels, chaque pixel étant issu d'un ou plusieurs photorécepteurs. Pour obtenir un bon contraste entre les crêtes et les vallées des empreintes digitales, seuls les rayons lumineux issus du doigt D ayant un angle d'incidence par rapport à la normale à la face supérieure 1200 compris entre l'angle critique $\theta_c$ et l'angle limite $\theta_l$ sont considérés.

Afin d'empêcher la prise en compte des rayons lumineux ayant un angle d'incidence inférieur à l'angle critique $\theta_c$ dans les images d'empreinte générées par le module de traitement 11, le capteur 124 ne comprend pas de photorécepteurs sensibles à la lumière à chaque position du capteur pouvant être frappée par un rayon lumineux issu du doigt D ayant un angle d'incidence par rapport à la normale à la face supérieure 1200 inférieur à l'angle critique $\theta_c$. De cette manière, seules des informations provenant des photorécepteurs situés à des positions pouvant être frappées par des rayons lumineux issus du doigt D après diffusion dans le doigt D ayant un angle d'incidence par rapport à la normale à la face supérieure 1200 compris entre l'angle critique $\theta_c$ et l'angle limite $\theta_l$ sont utilisées par le module de traitement 11 pour former des images d'empreintes.

Dans une mise en oeuvre particulière, chaque photorécepteur du capteur 124 correspondant à une position pouvant être frappée par un rayon lumineux issu du doigt D après diffusion dans le doigt D ayant un angle d'incidence par rapport à la normale à la face supérieure 1200 inférieur à l'angle critique $\theta_c$ est masqué par une couche métallique opaque, par exemple en aluminium. Les photorécepteurs situés en dessous de la couche métallique opaque deviennent donc non-sensibles à la lumière et ne peuvent donc pas fournir d'informations correspondant à des rayons lumineux issus du doigt D après diffusion dans le doigt D ayant un angle d'incidence par rapport à la normale à la face supérieure 1200 inférieur à l'angle critique $\theta_c$ au module de traitement 11. Il est connu qu'un photorécepteur d'un capteur CCD ou CMOS frappé par un faisceau de lumière risque de perturber les photorécepteurs de son voisinage, notamment lorsque ces photorécepteurs sont fortement saturés (par exemple lorsque le capteur 124 est dirigé vers le soleil). Un avantage de cette mise en oeuvre particulière est que, le masquage des photorécepteurs pouvant être frappés par un rayon lumineux issu du doigt D après diffusion dans le doigt D ayant un angle d'incidence par rapport à la normale à la face supérieure 1200 inférieur à l'angle critique $\theta_c$ empêche ces photorécepteurs de perturber leurs voisins.

Pour éviter que les zones d'incidences se recouvrent, les trous de l'écran opaque 122 sont agencés de telle sorte que la distance L entre un trou et le ou les trous qui sont ses plus proches voisins, prise de centre à centre, soit supérieure au diamètre d'une image du doigt D projetée sur le capteur 124 vu par un trou lorsque le doigt D est posé sur la face supérieure 1200. Si $d_T$ est le diamètre du trou, le diamètre de la projection du doigt D sur le capteur 124 vu par un trou $d_{AP}$ est donné par :

$$d_{AP} = d_T + 2.E_{123}.\tan(\theta_l)$$

et donc :

$$L > d_{AP}$$

Dans une mise en oeuvre particulière, les trous de l'écran opaque 122 sont espacés entre eux d'une distance $L > d_{AP}$ et, moyennant que la contrainte sur la distance L soit respectée, placés de manière quelconque sur l'écran opaque 122.

Dans une mise en oeuvre particulière, les trous de l'écran opaque 122 sont espacés entre eux d'une distance $L > d_{AP}$ et placés régulièrement, par exemple sous forme d'une matrice rectangulaire ou d'un maillage hexagonal, sur l'écran opaque 122.

Dans la Fig. 2, les photorécepteurs du capteur 124 représentés en blanc (tels que le photorécepteur 1241) sont des photorécepteurs sensibles à la lumière. Les photorécepteurs du capteur 124 représentés en noir (tels que le photorécepteur 1242) sont des photorécepteurs non-sensibles à la lumière.

La Fig. 3 illustre schématiquement une sous partie vue de face du capteur 124 adapté pour le premier mode de réalisation du dispositif biométrique 12.

Nous nous plaçons ici dans le cas où les trous de l'écran opaque 122 sont espacés entre eux d'une distance $L > d_{AP}$ et placés régulièrement sous forme d'une matrice rectangulaire de trous.

Le capteur 124 est constitué d'une matrice de photorécepteurs carrés généralement de « 1 » à « 10 »$\mu m$ de côté.

Superposés au capteur 124 est représentée une série de zones d'incidence réparties régulièrement sur le capteur 124. Chaque zone d'incidence comprend un disque central tel que le disque 1244 et un anneau périphérique tel que l'anneau 1243, le disque central et l'anneau périphérique d'une zone d'incidence étant concentriques. Chaque zone d'incidence correspond à un des trous de l'écran opaque 122 et représente une image du doigt D projetée sur le capteur 124 vu par ledit trou lorsque le doigt D est posé sur la face supérieure 1200. Par exemple, la zone d'incidence comprenant le disque central 1244 et l'anneau périphérique 1243 correspond au trou 122A. Le diamètre de chaque anneau périphérique correspond donc au diamètre $d_{AP}$ d'une image du doigt D projetée sur le capteur 124 vu par un trou lorsque le doigt D est posé sur la face supérieure 1200. Les trous de l'écran opaque 122 prenant la forme d'une matrice rectangulaire de trous, les zones d'incidence suivent cette forme sur le capteur 124. Lorsque les trous de l'écran opaque 122 sont circulaires, le centre de la zone d'incidence correspondant à un trou et le centre dudit trou sont confondus. La partie située dans un anneau périphérique (par exemple l'anneau périphérique 1243) correspond à une zone recevant des rayons lumineux ayant traversé l'écran opaque 122 par un trou (ici le trou 122A) et ayant un angle incident avec la normale à la face supérieure 1200 compris entre l'angle critique $\theta_c$ et l'angle limite $\theta_l$. La partie située à l'intérieur du disque central (par exemple le disque central 1244) correspond à une zone recevant des rayons lumineux ayant traversé l'écran opaque 122 par un trou (ici le trou 122A) et ayant un angle incident avec la normale à la face supérieure 1200 inférieur à l'angle critique $\theta_c$. Chaque partie du capteur 124 située à l'intérieur d'un disque central correspond donc à une partie dont on ne souhaite pas récupérer de l'information. Les photorécepteurs situés dans chacune de ces parties doivent donc être non-sensibles à la lumière. Chaque partie du capteur 124 située dans un anneau périphérique correspond donc à une partie dont on souhaite récupérer de l'information. Les photorécepteurs situés dans chacune de ces parties doivent donc être sensibles à la lumière. Les pixels situés en dehors d'un anneau périphérique reçoivent peu, voire jamais de lumière provenant du doigt si l'indice de réfraction du doigt placé sur la face supérieure 1200 est inférieur à l'indice de réfraction des lames transparentes 120 et 123.

On note que la distance L entre chaque trou permet d'imager au moins une fois chaque point du doigt D en regard de la face supérieure 1200. Le dispositif biométrique 12 ayant une géométrie connue, il est possible de déterminer quel(s) photorécepteur(s) du capteur 124 image(nt) un point du doigt D. Il devient alors possible de reconstituer une image de l'empreinte du doigt D par des techniques connues.

Le module de traitement 11 prend en compte l'information issue de chaque photorécepteur ayant imagé un point pour générer une représentation de ce point dans l'image de l'empreinte. Lors de cette génération d'une représentation, le module de traitement 11 rééquilibre les informations issues de chaque photorécepteur entre elles en prenant en compte, pour chaque photorécepteur, une information représentative d'une distance entre ledit photorécepteur et le point qui a été imagé. Dans une mise en oeuvre particulière, lorsqu'un même point du doigt D est imagé par plusieurs photorécepteurs du capteur 124, suite au rééquilibrage, le module de traitement 11 calcule une moyenne des informations issues de chaque photorécepteur ayant imagé ce point pour générer une représentation de ce point dans une image d'empreinte.

Dans une mise en oeuvre particulière, les lames transparentes 120 et 123 sont des lames de verre carrées de « 4.4 »$mm$ de côté et, comme nous l'avons vu plus haut, d'indice de réfraction $n_1$ = 1.5. Le capteur 124 est de forme carrée de « 3.9 »$mm$ de côté comprenant des photorécepteurs carrés de « 4 »$\mu$m de côté.

Dans une mise en oeuvre particulière, la lame transparente 123 a une épaisseur $E_{123}$ trois à dix fois inférieure à l'épaisseur $E_{120}$ de la lame transparente 120. Par exemple, l'épaisseur $E_{123}$ = 60$\mu$m et l'épaisseur $E_{120}$ = 300$\mu$m permettent, lorsque les deux lames ont le même indice de réfraction, d'obtenir un grandissement de

$$-1\big/5$$

(i.e. une image d'un objet sur le capteur 124 est cinq fois plus petite que l'objet réel posé sur la face supérieure 1200 et inversement une zone sur le capteur 124 correspond à une zone 5 fois plus grande sur la face supérieure 1200). Dans cette mise en oeuvre particulière, la lame transparente 123 est collée sur le capteur 124 ou réalisée par une série de dépôt sur le capteur 124.

Les standards d'imagerie d'empreintes digitales préconisent des résolutions d'images de doigt supérieures à 500 ou 1000 points par pouce (dpi). Avec un grandissement de $-1\big/5$, si l'on désire une image de doigt échantillonnée à plus de 500 dpi (resp. 1000 dpi), il faut des pixels de moins de 10 $\mu$m (resp. moins de 5 $\mu$m).

Dans une mise en oeuvre particulière, les trous de l'écran opaque 122 ont un diamètre de « 7 »$\mu$m et forment une matrice régulière de 10 × 10 trous dans laquelle les trous sont espacés d'une distance L=400$\mu$m de centre à centre les uns des autres tel que représenté en Fig. 3. Avec un angle critique $\theta_c$ = 41.8 degrés, un angle limite $\theta_l$ = 70 degrés, un diamètre de trou de « 7 »$\mu$m et une épaisseur de la lame 123 de « 60 »$\mu$m, chaque disque central a un diamètre d'environ « 114 »$\mu$m et chaque anneau périphérique a un diamètre extérieur d'environ « 337 »$\mu$m.

Dans une mise en oeuvre particulière, la face inférieure de l'écran opaque 122 et les bords des trous sont rendus absorbants en appliquant des techniques connues (application d'une couche de chrome noir, d'une couche d'encre, texturation de la face inférieure, etc.) afin de minimiser des réflexions entre l'écran opaque 122 et le capteur 124.

Dans une mise en oeuvre particulière, les DEL, qui sont représentées dans la Fig. 2 en dehors des lames 120 et 123 pour plus de clarté, sont soit intégrées sur une face inférieure de la lame 120 (i.e. la face de la lame 120 qui est en contact avec l'écran opaque 122), soit intégrées sur la face supérieure de la lame 123 (i.e. la face de la lame 123 comprenant l'écran opaque 122).

Dans une mise en oeuvre particulière, les DEL sont des DEL au nitrure de gallium (GaN) ou des OLED.

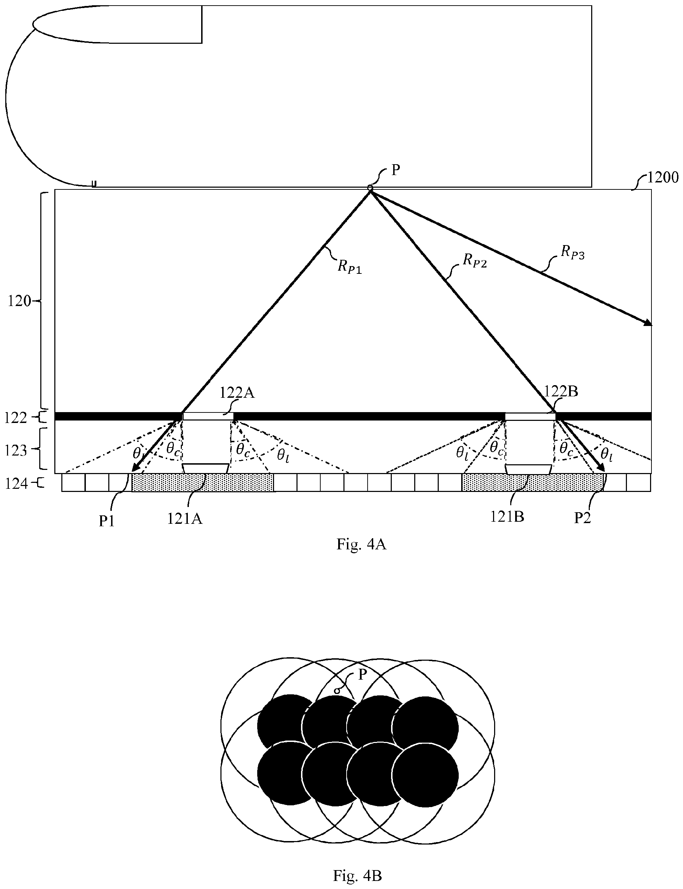

La **Fig. 4A** illustre schématiquement un deuxième mode de réalisation du dispositif biométrique 12 selon l'invention.

Dans ce mode de réalisation, nous retrouvons la lame 120, l'écran opaque 122, la lame 123 et le capteur 124.

Dans ce mode de réalisation, la source de lumière n'est plus située au niveau de l'écran opaque 122. Des DEL sont insérées au niveau du capteur 124, *i.e.* sous l'écran opaque 122. Au moins une partie des trous de l'écran opaque 122 a une DEL en vis-à-vis.

Afin que l'ensemble du doigt D en regard de la face supérieure 1200 diffuse de la lumière, les trous de l'écran opaque 122 ayant une DEL en vis-à-vis sont agencés de telle sorte que chaque DEL et la ou les DEL qui sont les plus proches voisines de ladite DEL génèrent des parties directement éclairées par les DEL distantes d'une distance $\delta$ inférieure à la distance $d_p$.

Par ailleurs, afin d'éviter les recouvrements entre les zones d'incidence, dans toutes les mises en oeuvre particulières relatives au mode de réalisation de la Fig. 4A, les trous de l'écran opaque 122 servant à imager le doigt D sont agencés de telle sorte que la distance minimum L entre un trou et le ou les trous qui sont ses plus proches voisins, prise de centre à centre, soit supérieure au diamètre de l'image du doigt D vu par un trou lorsque le doigt D est posé sur la face supérieure 1200, c'est-à-dire $L > d_{AP}$.

Chaque DEL peut être réalisée par dépôt sur le capteur 124. Dans ce cas, chaque DEL est intégrée en surface du capteur 124.

Dans une mise en oeuvre particulière, chaque DEL est intégrée dans le capteur 124.

Dans une mise en oeuvre particulière, chaque DEL génère un faisceau de lumière dirigé vers les trous ayant un angle d'incidence maximal $\theta_{max}$ par rapport à une normale à la face supérieure 1200 permettant d'éviter qu'après réflexion sur l'écran opaque 122, ces DEL éclairent des photorécepteurs sensibles à la lumière. Dans une mise en oeuvre particulière, $\theta_{max}$ = 23 degrés.

La **Fig. 4C** illustre schématiquement une sous partie vue de face d'un exemple de capteur 124 adapté au deuxième mode de réalisation du dispositif biométrique 12.

Dans le cas de la Fig. 4C, les trous de l'écran opaque 122 forment une matrice rectangulaire de trous.

Dans la Figure 4C, des DEL ont été insérées à des positions correspondant au centre de chaque disque central. On retrouve les DEL 121A et 121B représentées en Fig. 4A, et des DEL 121C, 121D, 121E et 121F. On trouve donc une DEL à chaque position du capteur 124 recevant des rayons lumineux ayant traversé l'écran opaque 122 par un trou et ayant un angle incident avec la normale à la face supérieure 1200 inférieur à l'angle critique $\theta_c$. Dans cette mise en oeuvre particulière, il y a donc une DEL positionnée au niveau du capteur 124 en face de chaque trou de l'écran opaque 122. Donc, de la même manière que les trous forment une matrice de trous sur l'écran opaque 122, les DEL forment une matrice de DEL sur le capteur 124. Comme dans le premier mode de réalisation du dispositif biométrique 12, les photorécepteurs situés dans un disque central sont non-sensibles à la lumière.

Avec des trous circulaires, chaque DEL éclaire un disque en face d'elle sur le doigt D lorsque celui-ci est posé sur la face supérieure 1200. Lorsque, par exemple, la lame transparente 120 et la lame transparente 123 ont respectivement une épaisseur de $E_{123} = 60 \mu m$ et $E_{120}$ = $300 \mu m$, les trous ont un diamètre de « 7 » $\mu m$, et chaque DEL est circulaire avec un diamètre de « 10 » $\mu m$, chaque DEL éclaire un disque d'environ « 92 » $\mu m$. Avec un écran opaque comprenant des trous régulièrement répartis avec une distance de « 400 » $\mu m$ entre les centres des trous, toute la surface du doigt D posé sur la face supérieure 1200 n'est pas éclairée par les DEL. Mais, comme nous l'avons vu plus haut, un doigt étant un milieu diffusant, l'ensemble de la surface du doigt en regard de la face supérieure 1200 renverra de la lumière.

Dans cette configuration, si on projette une zone d'incidence sur la face supérieure 1200 à travers le trou de l'écran opaque 122 correspondant à ladite zone d'incidence, on obtient une projection du disque central de diamètre environ égal à « 544 » $\mu m$ et une projection de l'anneau périphérique de diamètre extérieur environ égal à « 1656 » $\mu m$. Avec des trous régulièrement répartis avec une distance de « 400 » $\mu m$ entre les centres des trous, les projections des anneaux périphériques se recouvrent.

La **Fig. 4B** illustre schématiquement un fonctionnement du deuxième mode de réalisation du dispositif biométrique 12.

Dans la Fig. 4B, on reprend le dispositif de la Fig. 4C.

Dans la Fig. 4B, nous avons représenté les projections de 8 zones d'incidences sur la face supérieure 1200. Un point P, aussi représenté dans la Fig. 4A, apparaît dans la projection de trois anneaux périphériques différents. Ce point P est donc imagé trois fois sur le capteur 124 : une première fois en un point P1 en suivant un rayon $R_{P1}$, une deuxième fois en un point P2 en suivant un rayon $R_{P2}$ et une troisième fois en un point non représenté en suivant un rayon $R_{P3}$. Imager plusieurs fois chaque point du doigt D permet d'obtenir une meilleure qualité d'image.

Chaque DEL de la source lumineuse peut être allumée indépendamment des autres DEL. Il est par exemple possible d'allumer une seule DEL de la source lumineuse ou toutes les DEL de la source lumineuse.

La **Fig. 6** décrit un procédé de détection de fraude selon l'invention.

Le procédé décrit en relation avec la Fig. 6 est mis en oeuvre par le module de traitement 11 par exemple, à la suite d'une identification ou une authentification d'une personne. Le dispositif biométrique 12 utilisé peut être indifféremment, le dispositif biométrique 12 selon le premier mode de réalisation décrit en relation avec la Fig. 2 ou selon le deuxième mode de réalisation décrit en relation avec la Fig. 4A.

Dans une étape 61, le module de traitement 11 provoque une acquisition d'une première image d'empreinte par le dispositif biométrique 12 avec un éclairage du doigt D par la source lumineuse 121 tel que toute la surface du doigt D en contact avec la face 1200 renvoie de la lumière. Comme nous l'avons vu plus haut, parmi les rayons lumineux diffusés par le doigt D suite à l'éclairage par les DEL de la source lumineuse 121, seuls les rayons lumineux ayant un angle d'incidence par rapport à la normale à la face supérieure 1200 compris entre l'angle critique $\theta_c$ et l'angle limite $\theta_l$ sont utilisés pour créer la première image d'empreinte. Ainsi, la première image obtenue est une image dans laquelle les pixels représentant les crêtes ont une forte intensité lumineuse et les pixels représentant les vallées ont une faible intensité lumineuse par rapport aux pixels des crêtes. Le contraste entre les crêtes et les vallées est donc important.

Dans une étape 63, le module de traitement 11 provoque une acquisition d'au moins une seconde image d'empreinte avec un éclairage de la partie corporelle par la source lumineuse 121 utilisant une DEL ou une pluralité de DEL. Lorsqu'une pluralité de DEL est utilisée, lesdites DEL sont au moins distantes d'une distance prédéfinie. La distance prédéfinie est telle que la sous-partie du doigt D renvoyant la lumière émise par une DEL est disjointe de toute autre sous-partie du doigt D renvoyant de la lumière éclairée par une autre DEL. Lorsque la DEL est circulaire, une sous partie du doigt D renvoyant de la lumière est définie comme une zone circulaire du doigt D ayant une intensité lumineuse maximum en son centre et dont l'intensité lumineuse décroit radialement jusqu'à une intensité lumineuse minimum, l'intensité lumineuse minimum étant un pourcentage prédéfini (par exemple 1%) de l'intensité lumineuse maximum. L'intensité lumineuse minimum peut aussi être définie comme une intensité lumineuse qui n'est pas détectable par le capteur 124. L'intensité lumineuse minimum définit donc la limite de la sous partie du doigt D renvoyant de la lumière. Dans une mise en oeuvre particulière, le module de traitement provoque l'allumage d'une seule DEL prédéfinie de la source lumineuse 121 pour permettre une acquisition d'une seule seconde image. Ainsi, comme dans le document FR3015728, seule une zone bien définie et très réduite est éclairée directement sur la partie du doigt D en regard de la face 1200. La seconde image est l'image la plus informative pour déterminer si le doigt D est recouvert d'une vraie peau.

Dans une étape 67, le module de traitement 11 obtient une information représentative d'un niveau de lumière réémis par le doigt D.

Dans une mise en oeuvre particulière, on obtient un profil d'intensité lumineuse pour chaque sous-partie du doigt D renvoyant de la lumière. Pour ce faire, chaque sous partie du doigt D renvoyant de la lumière est découpée en plusieurs zones de calcul. Lorsque la DEL est circulaire, une première zone de calcul centrale a une forme de disque et les autres zones de calcul sont des anneaux concentriques entourant la zone de calcul centrale. Une intensité lumineuse moyenne des pixels est ensuite calculée pour chaque zone de calcul. L'intensité lumineuse moyenne d'une zone est calculée à partir des pixels de ladite zone représentant des crêtes de l'empreinte. Pour identifier des pixels correspondant à des crêtes, le module de traitement utilise la première image. Dans la première image, chaque pixel correspondant à une crête a une valeur d'intensité lumineuse élevée par rapport à un pixel correspondant à une vallée. Dans une mise en oeuvre particulière, la valeur d'intensité lumineuse de chaque pixel de la première image est comparée à un seuil prédéfini. Sur la base de cette comparaison, chaque pixel de la première image est classé soit dans une première catégorie correspondant à une crête, soit dans une seconde catégorie ne correspondant pas à une crête. Les pixels dont la valeur d'intensité lumineuse est supérieure au seuil prédéfini sont classés dans la première catégorie. Les pixels dont la valeur d'intensité lumineuse est inférieure ou égale au seuil prédéfini sont classés dans la seconde catégorie. Un avantage du dispositif biométrique 12 est que, puisqu'il utilise le principe de réflexion totale à fond sombre, la première image qu'il génère comprend moins de pixels correspondant à des défauts de la face 1200 qui pourraient être interprétés par le module de traitement 11 comme des pixels de crêtes.

Lors du calcul de chaque intensité lumineuse moyenne d'une zone de calcul, le module de traitement 11 vérifie pour chaque pixel de la seconde image correspondant à ladite zone de calcul, si le pixel correspondant dans la première image a été classé dans la classe pixel de crête. Si c'est le cas, ce pixel est pris en compte dans le calcul de la moyenne. Sinon, ce pixel n'est pas pris en compte dans le calcul de la moyenne. A partir de la moyenne d'intensité lumineuse calculée pour chaque zone de calcul, le module de traitement 11 obtient une courbe d'intensité lumineuse et une courbe du gradient d'intensité lumineuse en fonction de la distance entre la zone de calcul et le centre de la zone de calcul centrale. Le centre de la zone de calcul centrale correspond à la projection du centre de la DEL correspondant à cette zone de calcul sur la face supérieure 1200.

Chaque courbe obtenue constitue l'information représentative du niveau de lumière réémis par le doigt D.

Dans une étape 68, le module de traitement 11 compare l'information représentative du niveau de lumière réémis par le doigt D à une information de référence représentative d'un niveau de lumière réémis par un vrai doigt posé sur la face 1200 pour valider que le doigt D posé sur la face 1200 est un vrai doigt. Pour que le doigt D soit validé, il faut que la courbe d'intensité lumineuse (respectivement la courbe de gradient) en fonction de la distance reste entre deux courbes d'intensité lumineuse limites (respectivement deux courbes de gradient d'intensité lumineuse limites) estimées à partir de courbes de référence. Il est également possible de mesurer pour chaque point d'une pluralité de points prédéfinie de la courbe d'intensité lumineuse (respectivement de la courbe de gradient d'intensité lumineuse), l'écart entre la valeur d'intensité lumineuse (respectivement la valeur du gradient) dudit point et une valeur d'intensité lumineuse d'un point correspondant (*i.e.* situé à la même distance de la zone éclairée) sur les deux courbes d'intensité lumineuse limites (respectivement les deux courbes de gradient d'intensité lumineuse limites), de sommer en valeur absolue ces écarts et de comparer cette somme à un seuil limite prédéfini.

Les courbes de références (*i.e.* les courbes d'intensité lumineuse limites et les courbes de gradients d'intensité lumineuse limites) sont ici des courbes d'intensité lumineuse et de gradients d'intensité lumineuse qui ont été établies à partir d'un vaste panel de vrais doigts en utilisant le dispositif biométrique 12.

L'intensité lumineuse des pixels de la première image est une valeur représentative d'une efficacité de couplage de lumière entre le capteur 124 et le doigt D. Dans une mise en oeuvre particulière de l'étape 67, le module de traitement 11 utilise cette information pour reconstituer le niveau de lumière émis par le doigt D. Pour ce faire, le module de traitement 11 calcule pour chaque zone de calcul de la deuxième image, un produit scalaire entre ladite zone de calcul et une zone correspondante spatialement dans la première image (*i.e.* un anneau identique situé à la même position dans la première image). Pour chaque zone, ce produit scalaire est divisé, par exemple, par la norme au carré de la première image (*i.e.* par le produit scalaire de la première image par elle-même), de manière à obtenir pour chaque zone un produit scalaire normalisé. A partir des produits scalaires normalisés calculés pour chaque zone de calcul, le module de traitement 11 obtient une courbe de produits scalaires et une courbe de gradients de produits scalaires en fonction de la distance entre la zone de calcul et la zone éclairée. Chaque courbe obtenue dans cette mise en oeuvre particulière constitue l'information représentative du niveau de lumière réémis par le doigt D.

Dans cette mise en oeuvre particulière, lors de l'étape 68, le module de traitement 11 utilise les courbes ainsi obtenues pour valider ou pas le doigt D. Pour que le doigt D soit validé, il faut que la courbe de produits scalaires (respectivement la courbe de gradients de produits scalaires) en fonction de la distance reste entre deux courbes de produits scalaires limites (respectivement deux courbes de gradients de produits scalaires limites) estimées là aussi à partir de courbes de produits scalaires de référence. De nouveau, il est également possible de mesurer pour chaque point d'une pluralité de points prédéfinie de la courbe de produits scalaires (respectivement de la courbe de gradient de produits scalaires), l'écart entre la valeur du produit scalaire (respectivement la valeur du gradient du produit scalaire) dudit point et une valeur de produit scalaire d'un point correspondant sur les deux courbes de produits scalaires limites (respectivement les deux courbes de gradient de produits scalaires limites), de sommer en valeur absolue ces écarts et de comparer cette somme à un seuil limite prédéfini.

Les courbes de références sont ici des courbes de produits scalaires et de gradients de produits scalaires qui ont été établies à partir d'un vaste panel de vrais doigts en utilisant le dispositif biométrique 12.

On note que dans cette mise en oeuvre particulière, d'autres normalisations sont possibles.

Par ailleurs, dans cette mise en oeuvre particulière, il est possible d'utiliser une mesure d'albédo en plus des valeurs de produit scalaire normalisé calculées. Cette mesure d'albédo peut être calculée sur la première image sous forme d'une valeur d'intensité lumineuse moyenne ou médiane calculée sur tous les pixels de ladite image ou uniquement sur les pixels correspondant aux crêtes dans la première image. La mesure d'albédo obtenue est comparée à des mesures d'albédo de référence obtenues à partir d'un vaste panel de vrais doigts en utilisant le dispositif biométrique 12. Cette mesure d'albédo est par exemple utilisée pour confirmer ou infirmer des conclusions prises sur la validité d'un doigt à partir des courbes de produits scalaires et/ou des courbes de gradients de produits scalaires.

Dans une mise en oeuvre particulière de l'étape 63, une pluralité de DEL est allumée. Les DEL de ladite pluralité sont choisies de manière à obtenir plusieurs sous-parties du doigt D renvoyant de la lumière, chaque sous-partie étant disjointe. Dans cette mise en oeuvre particulière, pour chaque sous-partie on obtient un couple de courbes comprenant une courbe d'intensité lumineuse (respectivement une courbe de produits scalaires) et une courbe de gradients d'intensité lumineuse (respectivement une courbe de gradients de produits scalaires). L'étape 68 est appliquée à chaque couple de courbes. Dans une mise en oeuvre particulière, si lors d'au moins une application de l'étape 68 il ressort que le doigt D n'est pas un vrai doigt, alors le module de traitement décide qu'il est en présence d'un faux doigt et donc d'une fraude.

Dans une mise en oeuvre particulière, lors de l'étape 63, une pluralité de secondes images est obtenue en éclairant successivement le doigt D à partir d'au moins une DEL émettant dans une longueur d'onde différente pour chaque seconde image. Par exemple, une première longueur d'onde se situe en dessous de « 600 nm » et une deuxième longueur d'onde se situe au-dessus de « 600 nm ». Pour chaque longueur d'onde, le module de traitement 11 met en oeuvre les étapes 66, 67 et 68. Si, lors d'au moins une application de l'étape 68, il ressort que le doigt D n'est pas un vrai doigt, alors le module de traitement décide qu'il est en présence d'un faux doigt et donc d'une fraude. Pour chaque longueur d'onde, le module de traitement utilise lors de l'étape 68 des courbes limites (*i.e.* des courbes d'intensité lumineuse limites, de gradients d'intensité lumineuse limites, de produits scalaires limites et de gradients de produits scalaires limites) adaptés à chaque longueur d'onde.

Dans une mise en oeuvre particulière, lors d'une étape 62 comprise entre l'étape 61 et 63, le module de traitement 11 choisit au moins une DEL à allumer pour l'acquisition de chaque seconde image suivant un critère prédéfini. Par exemple, lorsqu'une seule seconde image est acquise en utilisant une seule DEL, la DEL allumée est la DEL la plus proche d'une position d'un barycentre de la partie du doigt D en contact avec la face 1200, ou la DEL la plus proche d'une position du centre de courbure, qu'on appelle aussi *noyau,* des crêtes de la partie du doigt D en contact avec la face 1200 telle que définie dans le document EP3073416.

Pour faciliter le choix d'une ou plusieurs DEL à allumer, le module de traitement 11 peut procéder à une localisation du doigt dans la première image et choisir chaque DEL à allumer en fonction de la position du doigt ainsi localisé.

Lors d'une comparaison d'empreintes digitales, par exemple dans un procédé d'authentification mis en oeuvre par un dispositif d'authentification, deux images sont comparées : une image acquise par le dispositif d'authentification, dite image acquise, et une image d'une empreinte de référence stockée dans une base de données, dite image de référence.

Lors de la comparaison, on met en correspondance des régions de l'empreinte de l'image acquise avec des régions de l'empreinte de l'image de référence. On compare ensuite les régions mises en correspondance pour procéder à l'authentification.

Dans certaines méthodes, pour diminuer la complexité de la comparaison, on s'appuie sur des points particuliers, appelés *minutie,* correspondant à des bifurcations et à des fins de lignes visibles d'une empreinte. Chaque minutie de l'image acquise est comparée à une minutie correspondante de l'image de référence. A l'issue de chaque comparaison, un score de ressemblance est calculé pour chaque minutie, et un score de ressemblance global est calculé pour l'ensemble de l'empreinte.

Les régions et les minuties mises en correspondance sont représentatives des informations les plus importantes d'une empreinte. On a donc tout intérêt à rechercher d'éventuelles fraudes au voisinage de ces régions ou de ces minuties.

Dans une mise en oeuvre particulière, le module de traitement 11 se focalise sur les minuties détectées dans les crêtes de la première image pour déterminer si le doigt D est recouvert d'une vraie peau. Lors de l'étape 62, le module de traitement 11 choisit une DEL permettant d'éclairer un point de la deuxième image correspondant spatialement à un barycentre de minuties de la première image associées positivement avec des minuties de l'image de référence ou correspondant spatialement au barycentre d'une région de forme prédéfinie de la première image comprenant la plus forte densité de minuties associées positivement avec des minuties de l'image de référence. La région de forme prédéfinie peut par exemple être un cercle. Cette mise en oeuvre particulière permet de contrer des méthodes consistant à juxtaposer une utilisation d'un doigt recouvert d'une fausse peau pour l'authentification et d'un vrai doigt pour la validation du doigt.

Certaines fraudes consistent à recouvrir partiellement un doigt d'une fausse peau. Dans ce cas, deux zones apparaissent dans l'image d'empreinte, ces deux zones étant séparées par une frontière. Cette frontière peut ressembler à une cicatrice. Il est alors pertinent de vérifier que les propriétés de diffusion de la lumière dans le doigt sont identiques de chaque côté de la frontière. En effet, des propriétés de diffusion différente indiqueraient la présence d'une fraude. Dans une mise en oeuvre particulière, suite à l'acquisition de la première image, le module de traitement 11 effectue une analyse de cette première image afin d'y détecter une éventuelle frontière. Si une frontière est détectée, le module de traitement 11 choisit lors de l'étape 62 une première DEL éclairant d'un premier côté de la frontière détectée et une deuxième DEL éclairant d'un second côté de la frontière détectée. Lors de l'étape 63, deux secondes images sont acquises en allumant successivement la première et la deuxième DEL choisies. Les étapes suivantes du procédé décrit en relation avec la Fig. 6 sont appliquées indépendamment sur chaque deuxième image. Le doigt est validé si, pour chaque seconde image, lors de l'étape 68, le module de traitement 11 déclare le doigt valide et si l'information représentative du niveau de lumière réémis par le doigt D obtenue pour la première seconde image est similaire suivant un critère prédéfini à l'information représentative du niveau de lumière réémis par le doigt D obtenue pour la deuxième seconde image.

Dans une mise en oeuvre particulière, le procédé décrit en relation avec la Fig. 6 comprend deux étapes intermédiaires 64 et 65 entre l'étape 63 et l'étape 67. Lors de l'étape 64, le module de traitement 11 déclenche une acquisition d'une image supplémentaire sans éclairage par la source lumineuse 121.

Lors de l'étape 65, l'image supplémentaire est soustraite à la première et à chaque seconde image de sorte que dans la suite du procédé (*i.e.* les étapes 67 à 68), ce sont des première et seconde images résultant de cette soustraction qui sont utilisées en lieu et place des première et seconde images originales.

Cette mise en oeuvre particulière permet d'améliorer les performances du procédé en cas d'illumination par au moins une source de lumière extérieure.

La **Fig. 7** illustre schématiquement un exemple d'architecture matérielle du module de traitement 11.

Selon l'exemple d'architecture matérielle représenté à la Fig. 7, le module de traitement 11 comprend alors, reliés par un bus de communication 110 : un processeur ou CPU (« Central Processing Unit » en anglais) 111 ; une mémoire vive RAM (« Random Access Memory » en anglais) 112 ; une mémoire morte ROM (« Read Only Memory » en anglais) 113 ; une unité de stockage telle qu'un disque dur ou un lecteur de support de stockage, tel qu'un lecteur de cartes SD (« Secure Digital » en anglais) 114 ; au moins une interface de communication 115 permettant au module de traitement 11 de communiquer avec le dispositif biométrique 12.

Le processeur 111 est capable d'exécuter des instructions chargées dans la RAM 112 à partir de la ROM 113, d'une mémoire externe (non représentée), d'un support de stockage (tel qu'une carte SD), ou d'un réseau de communication. Lorsque le module d'analyse 11 est mis sous tension, le processeur 111 est capable de lire de la RAM 112 des instructions et de les exécuter. Ces instructions forment un programme d'ordinateur causant la mise en oeuvre, par le processeur 111, du procédé décrit en relation avec la Fig. 6.

Le procédé décrit en relation avec la Fig. 6 peut être implémenté sous forme logicielle par exécution d'un ensemble d'instructions par une machine programmable, par exemple un DSP (« Digital Signal Processor » en anglais),un microcontrôleur ou un GPU (processeur graphique, « Graphics Processing Unit » en terminologie anglo-saxonne), ou être implémenté sous forme matérielle par une machine ou un composant dédié, par exemple un FPGA (« Field-Programmable Gate Array » en anglais) ou un ASIC (« Application-Specific Integrated Circuit » en anglais).

On note que le module de traitement 11 aurait tout aussi bien pu être compris dans le dispositif biométrique 12.

Par ailleurs, les mises en oeuvre décrites indépendamment ci-dessus pour plus de clarté, peuvent être combinées.


## Revendications

1.    Procédé de détection de fraude lors d'une utilisation d'un dispositif de capture d'une empreinte d'une partie corporelle, ledit dispositif comprenant une première lame transparente (120) comprenant une face supérieure (1200) sur laquelle est posée une partie corporelle à vérifier, une source lumineuse (121) comprenant une pluralité de DEL éclairant exclusivement en direction de la face supérieure, un écran opaque à la lumière situé en dessous de la première lame transparente, une deuxième lame transparente située en dessous de l'écran opaque et un capteur d'image (124) situé en dessous de la deuxième lame transparente (123), les deux lames transparentes, l'écran opaque et le capteur d'image étant parallèles et l'écran opaque (122) comprenant un réseau de trous destinés à laisser des rayons lumineux issues de la source lumineuse atteindre ledit capteur d'image (124), lesdits rayons lumineux permettant au capteur d'image de générer une image de ladite empreinte, chaque DEL étant configurée de telle sorte que chaque rayon lumineux produit par ladite DEL ait un angle par rapport à la normale à la face supérieure (1200) inférieur à un angle critique **caractérisé en ce que** le procédé comprend:

utiliser ledit dispositif pour acquérir (61) une première image d'empreinte avec un éclairage de la partie corporelle à vérifier par la source lumineuse, dit premier type d'éclairage, tel que toute la surface de la partie corporelle à vérifier en contact avec la lame transparente renvoie de la lumière ;
utiliser ledit dispositif pour acquérir (63) au moins une seconde image d'empreinte avec un éclairage de la partie corporelle à vérifier par la source lumineuse, dit deuxième type d'éclairage, tel qu'au moins une DEL est allumée, lorsqu'une pluralité de DEL est allumée, lesdites DEL sont au moins distantes d'une distance prédéfinie telle que la sous-partie du doigt D renvoyant la lumière émise par une DEL est disjointe de toute autre sous-partie du doigt D renvoyant de la lumière éclairée par une autre DEL ;
obtenir (67) pour chaque seconde image d'empreinte une information représentative d'un niveau de lumière réémis par la partie corporelle à vérifier en utilisant ladite seconde image d'empreinte et la première image d'empreinte ; et,
comparer (68) ladite information à une information de référence représentative d'un niveau de lumière réémis par une vraie partie corporelle posée sur la lame transparente pour valider que la partie corporelle à vérifier est une vraie partie corporelle, ladite information représentative d'un niveau de lumière réémis par la partie corporelle à vérifier comprend au moins une courbe représentant une intensité lumineuse émise par la partie corporelle et au moins une courbe de gradients d'intensité lumineuse émise par la partie corporelle en fonction d'une distance à un centre d'une zone directement éclairée par la source lumineuse (121) lorsque celle-ci éclaire la partie corporelle selon le deuxième type d'éclairage, chaque courbe étant obtenue en ne prenant en compte que des intensités lumineuses de pixels correspondant à des crêtes de l'empreinte de la partie corporelle, lesdits pixels étant identifiés en utilisant la première image d'empreinte ; ou au moins une courbe représentant des produits scalaires normalisés calculés entre la première et la seconde images d'empreinte et au moins une courbe représentant des gradients de produits scalaires normalisés calculés entre la première et la seconde images d'empreinte, en fonction d'une distance à un centre d'une zone directement éclairée par la source lumineuse (121) lorsque celle-ci éclaire la partie corporelle selon le deuxième type d'éclairage.

2.    Procédé selon la revendication 1, **caractérisé en ce que** l'information représentative d'un niveau de lumière réémis par la partie corporelle à vérifier comprend en outre une mesure d'albédo, ladite mesure étant obtenue à partir de la première image d'empreinte.

**3.** Procédé selon la revendication 1 ou 2, **caractérisé en ce que** lorsqu'une pluralité de DEL est allumée simultanément pour obtenir une seconde image d'empreinte, l'obtention de l'information représentative d'un niveau de lumière réémis par la partie corporelle à vérifier et la comparaison de ladite information à une information de référence sont effectuées pour chaque sous-partie pour valider que la partie corporelle à vérifier est une vraie partie corporelle.

**4.** Procédé selon l'une quelconque des revendications précédentes, **caractérisé en ce que**, lorsqu'une pluralité de secondes images d'empreinte est obtenue, le deuxième type d'éclairage est modifié pour chaque seconde image d'empreinte et l'obtention de l'information représentative d'un niveau de lumière réémis par la partie corporelle à vérifier et la comparaison de ladite information à une information de référence sont effectuées pour chaque seconde image d'empreinte pour valider que la partie corporelle à vérifier est une vraie partie corporelle.

**5.** Procédé selon la revendication 4, **caractérisé en ce que** la modification du deuxième type d'éclairage consiste à faire varier la longueur d'onde émise par le système d'éclairage ou la position de chaque DEL allumée du système d'éclairage pour chaque seconde image d'empreinte.

**6.** Procédé selon l'une quelconque des revendications précédentes, **caractérisé en ce que**, préalablement à l'acquisition de chaque seconde image, le procédé comprend choisir au moins une DEL à allumer pour l'acquisition de chaque seconde image suivant un premier critère prédéfini en utilisant la première image.

**7.** Procédé selon la revendication 6, **caractérisé en ce que**, le procédé comprend en outre localiser le doigt dans la première image et choisir chaque DEL à allumer en fonction de la position du doigt ainsi localisé.

**8.** Procédé selon la revendication 6 ou 7, **caractérisé en ce que**, lorsqu'une frontière séparant deux zones est détectée dans la première image d'empreinte, une première seconde image d'empreinte est acquise en éclairant la partie corporelle avec une première DEL générant une sous-partie renvoyant de la lumière d'un premier côté de la frontière et une deuxième seconde image d'empreinte est acquise en éclairant la partie corporelle avec une deuxième DEL générant une sous-partie renvoyant de la lumière d'un deuxième côté de la frontière, et les informations représentatives d'un niveau de lumière réémis par la partie corporelle à vérifier issues de chaque seconde image devant être similaire suivant un deuxième critère prédéfini pour valider que la partie corporelle à vérifier est une vraie partie corporelle.

**9.** Procédé selon la revendication 8, **caractérisé en ce que**, lorsqu'une seule DEL est choisie, la DEL choisie est la DEL la plus proche d'une position d'un barycentre de la partie corporelle en contact avec la lame transparente ou la plus proche d'un centre de courbure des crêtes de l'empreinte de la partie corporelle en contact avec la lame transparente, ou la plus proche d'un barycentre de minuties détectées dans les crêtes de ladite empreinte.

**10.** Procédé selon l'une quelconque des revendications précédentes, **caractérisé en ce que** le procédé comprend en outre :

acquérir une image d'empreinte supplémentaire sans éclairage par la source lumineuse ; effectuer une soustraction de l'image d'empreinte supplémentaire à la première et à chaque seconde image de sorte que la première et chaque seconde image d'empreinte utilisées lors de l'obtention de l'information représentative d'un niveau de lumière réémis par la partie corporelle à vérifier et la comparaison de ladite information à une information de référence sont des images issues de cette soustraction.

**11.** Dispositif comprenant des moyens pour mettre en oeuvre le procédé selon l'une quelconque des revendications 1 à 10.

**12.** Equipement comprenant un dispositif selon la revendication 11.

**13.** Programme d'ordinateur, **caractérisé en ce qu'**il comprend des instructions pour mettre en oeuvre, par un dispositif, le procédé selon l'une quelconque des revendications 1 à 10, lorsque ledit programme est exécuté par une unité de calcul dudit dispositif.

**Patentansprüche**

**1.** Verfahren zur Betrugserkennung bei einer Benutzung einer Erfassungsvorrichtung eines Abdrucks eines Körperteils, wobei die Vorrichtung ein erstes durchsichtiges Plättchen (120), das eine Oberseite (1200) enthält, auf die ein zu überprüfender Körperteil aufgelegt wird, eine Lichtquelle (121), die eine Vielzahl von LEDs enthält, die ausschließlich in Richtung der Oberseite leuchten, einen lichtundurchlässigen Schirm, der sich unter dem ersten durchsichtigen Plättchen befindet, ein zweites durchsichtiges Plättchen, das sich unter dem undurchlässigen Schirm befindet, und einen Bildsensor (124) enthält, der sich unter dem zweiten durchsichtigen Plättchen (123) befindet, wobei die zwei durchsichtigen Plättchen, der undurchlässige Schirm und der Bildsensor parallel sind und der undurchlässige Schirm (122) ein Netz von Löchern enthält, die dazu bestimmt sind, von der Lichtquelle stammende Lichtstrahlen den Bildsensor (124) erreichen zu lassen, wobei die Lichtstrahlen es dem Bildsensor erlauben, ein Bild des Abdrucks zu erzeugen, wobei jede LED so konfiguriert ist, dass jeder von der LED erzeugte Lichtstrahl einen Winkel bezüglich der Normalen zur Oberseite (1200) hat, der geringer ist als ein kritischer Winkel, **dadurch gekennzeichnet, dass** das Verfahren enthält:

Verwenden der Vorrichtung zum Erfassen (61) eines ersten Abdruckbilds mit einer Beleuchtung des zu überprüfenden Körperteils durch die Lichtquelle, erster Beleuchtungstyp genannt, derart, dass die ganze Fläche des zu überprüfenden Körperteils in Kontakt mit dem durchsichtigen Plättchen Licht zurückwirft;

Verwenden der Vorrichtung zum Erfassen (63) mindestens eines zweiten Abdruckbilds mit einer Beleuchtung des zu überprüfenden Körperteils durch die Lichtquelle, zweiter Beleuchtungstyp genannt, derart, dass mindestens eine LED eingeschaltet ist, wenn eine Vielzahl von LEDs eingeschaltet ist, die LEDs mindestens um einen derartigen vordefinierten Abstand beabstandet sind, dass der das von einer LED emittierte Licht zurückwerfende Teilbereich des Fingers D von jedem anderen Licht zurückwerfenden Teilbereich des Fingers D getrennt ist, der von einer anderen LED beleuchtet wird;

Erhalt (67) für jedes zweite Abdruckbild einer für ein vom zu überprüfenden Körperteil reemittiertes Lichtniveau repräsentativen Information unter Verwendung des zweiten Abdruckbilds und des ersten Abdruckbilds; und

Vergleich (68) der Information mit einer für ein von einem auf das durchsichtige Plättchen aufgelegten echten Körperteil reemittiertes Lichtniveau repräsentativen Bezugsinformation, um zu bestätigen, dass der zu überprüfende Körperteil ein echter Körperteil ist, wobei die für ein vom zu überprüfenden Körperteil reemittiertes Lichtniveau repräsentative Information mindestens eine eine vom Körperteil emittierte Lichtstärke darstellende Kurve und mindestens eine Kurve von Gradienten einer vom Körperteil emittierten Lichtstärke abhängig von einem Abstand zu einer Mitte einer direkt von der Lichtquelle (121) beleuchteten Zone, wenn diese den Körperteil gemäß dem zweiten Beleuchtungstyp beleuchtet, wobei jede Kurve erhalten wird, indem nur Lichtstärken von Pixeln berücksichtigt werden, die Graten des Abdrucks des Körperteils entsprechen, wobei die Pixel unter Verwendung des ersten Abdruckbilds identifiziert werden; oder mindestens eine Kurve, die normierte Skalarprodukte darstellt, die zwischen dem ersten und dem zweiten Abdruckbild berechnet werden, und mindestens eine Kurve enthält, die Gradienten von normierten Skalarprodukten darstellt, die zwischen dem ersten und dem zweiten Abdruckbild berechnet werden, abhängig von einem Abstand zu einer Mitte einer direkt von der Lichtquelle (121) beleuchteten Zone, wenn diese den Körperteil gemäß dem zweiten Beleuchtungstyp beleuchtet.

2. Verfahren nach Anspruch 1, **dadurch gekennzeichnet, dass** die für ein vom zu überprüfenden Körperteil reemittiertes Lichtniveau repräsentative Information außerdem ein Albedo-Maß enthält, wobei das Maß ausgehend vom ersten Abdruckbild erhalten wird.

3. Verfahren nach Anspruch 1 oder 2, **dadurch gekennzeichnet, dass**, wenn eine Vielzahl von LEDs gleichzeitig eingeschaltet ist, um ein zweites Abdruckbild zu erhalten, der Erhalt der für ein vom zu überprüfenden Körperteil reemittiertes Lichtniveau repräsentativen Information und der Vergleich der Information mit einer Bezugsinformation für jeden Teilbereich ausgeführt werden, um zu bestätigen, dass der zu überprüfende Körperteil ein echter Körperteil ist.

4. Verfahren nach einem der vorhergehenden Ansprüche, **dadurch gekennzeichnet, dass**, wenn eine Vielzahl zweiter Abdruckbilder erhalten wird, der zweite Beleuchtungstyp für jedes zweite Abdruckbild geändert wird, und der Erhalt der für ein vom zu überprüfenden Körperteil reemittiertes Lichtniveau repräsentativen Information und der Vergleich der Information mit einer Bezugsinformation für jedes zweite Abdruckbild ausgeführt werden, um zu bestätigen, dass der zu überprüfende Körperteil ein echter Körperteil ist.

5. Verfahren nach Anspruch 4, **dadurch gekennzeichnet, dass** die Änderung des zweiten Beleuchtungstyps darin besteht, die vom Beleuchtungssystem emittierte Wellenlänge oder die Position jeder eingeschalteten LED des Beleuchtungssystems für jedes zweite Abdruckbild zu variieren.

6. Verfahren nach einem der vorhergehenden Ansprüche, **dadurch gekennzeichnet, dass** das Verfahren vor der Erfassung jedes zweiten Bilds enthält, mindestens eine für die Erfassung jedes zweiten Bilds einzuschaltende LED gemäß einem unter Verwendung des ersten Bilds vordefinierten ersten Kriterium auszuwählen.

7. Verfahren nach Anspruch 6, **dadurch gekennzeichnet, dass** das Verfahren außerdem enthält, den Finger im ersten Bild zu lokalisieren und jede einzuschaltende LED abhängig von der Position des so lokalisierten Fingers auszuwählen.

8. Verfahren nach Anspruch 6 oder 7, **dadurch gekennzeichnet, dass**, wenn eine zwei Zonen trennende Grenze im ersten Abdruckbild erkannt wird, ein erstes zweites Abdruckbild durch Beleuchten des Körperteils mit einer ersten LED erfasst wird, was einen Teilbereich erzeugt, der Licht von einer ersten Seite der Grenze zurückwirft, und ein zweites zweites Abdruckbild durch Beleuchten des Körperteils mit einer zweiten LED erfasst wird, was einen Teilbereich erzeugt, der Licht von einer zweiten Seite der Grenze zurückwirft, und die für ein vom zu überprüfenden Körperteil reemittiertes Lichtniveau repräsentativen Informationen, die von jedem zweiten Bild stammen, gemäß einem zweiten vordefinierten Kriterium gleich sein müssen, um zu bestätigen, dass der zu überprüfende Körperteil ein echter Körperteil ist.

9. Verfahren nach Anspruch 8, **dadurch gekennzeichnet, dass**, wenn nur eine LED gewählt wird, die gewählte LED die LED ist, die einer Position eines Schwerpunkts des Körperteils in Kontakt mit dem durchsichtigen Plättchen am nächsten ist, oder die einem Krümmungszentrum der Grate des Abdrucks des Körperteils in Kontakt mit dem durchsichtigen Plättchen am nächsten ist, oder die einem Schwerpunkt von in den Graten des Abdrucks erkannten Minuzien am nächsten ist.

10. Verfahren nach einem der vorhergehenden Ansprüche, **dadurch gekennzeichnet, dass** das Verfahren außerdem enthält:

Erfassen eines zusätzlichen Abdruckbilds ohne Beleuchtung durch die Lichtquelle;
Ausführen einer Subtraktion des zusätzlichen Abdruckbilds vom ersten und von jedem zweiten Bild, so dass das erste und jedes zweite Abdruckbild, die beim Erhalt der für ein vom zu überprüfenden Körperteil reemittiertes Lichtniveau repräsentativen Information und beim Vergleich der Information mit einer Bezugsinformation verwendet werden, Bilder sind, die von dieser Subtraktion stammen.

11. Vorrichtung, die Einrichtungen zur Durchführung des Verfahrens nach einem der Ansprüche 1 bis 10 enthält.

12. Gerät, das eine Vorrichtung nach Anspruch 11 enthält.

13. Computerprogramm, **dadurch gekennzeichnet, dass** es Anweisungen enthält, um das Verfahren nach einem der Ansprüche 1 bis 10 durch eine Vorrichtung durchzuführen, wenn das Programm von einer Recheneinheit der Vorrichtung ausgeführt wird.

**Claims**

1. Method for detecting fraud when a device for capturing a print of a body part is being used, said device comprising a first transparent slide (120) comprising an upper face (1200) on which a body part to be checked is placed, a light source (121) comprising a plurality of LEDs lighting exclusively in the direction of the upper face, a screen which is opaque to light and located below the first transparent slide, a second transparent slide located below the opaque screen and an image sensor (124) located below the second transparent slide (123), the two transparent slides, the opaque screen and the image sensor being parallel and the opaque screen (122) comprising an array of holes which are intended to let light rays originating from the light source reach said image sensor (124), said light rays making it possible for the image sensor to generate an image of said print, each LED being configured so that each light ray produced by said LED has an angle with respect to the normal to the upper face (1200) which is smaller than a critical angle, **characterized in that** the method comprises:

using said device to acquire (61) a first print image with the body part to be checked being lit by the light source, referred to as the first type of lighting, such that the whole surface of the body part to be checked in contact with the transparent slide reflects light;
using said device to acquire (63) at least one second print image with the body part to be checked being lit by the light source, referred to as the second type of lighting, such that at least one LED is on; when a plurality of LEDs are on, said LEDs are at least distant by a predefined distance such that the sub-part of the finger D reflecting the light emitted by an LED is disjoint from any other sub-part of the finger D reflecting light lit by another LED;
obtaining (67), for each second print image, information which is representative of a light level reemitted by the body part to be checked using said second print image and the first print image; and
comparing (68) said information with reference information which is representative of a light level reemitted by a real body part placed on the transparent slide in order to confirm that the body part to be checked is a real body part, said information which is representative of a light level reemitted by the body part to be checked comprises at least one curve representing a luminous intensity emitted by the body part and at least one curve of gradients of luminous intensity which is emitted by the body part in accordance with a distance to a centre of an area lit directly by the light source (121) when the latter is lighting the body part according to the second type of lighting, each curve being obtained by taking into account only luminous intensities of pixels corresponding to ridges of the print of the body part, said pixels being identified using the first print image; or at least one curve representing normalized scalar products calculated between the first and the second print images and at least one curve representing gradients of normalized scalar products calculated between the first and the second print images, in accordance with a distance to a centre of an area lit directly by the light source (121) when the latter is lighting the body part according to the second type of lighting.

2. Method according to Claim 1, **characterized in that** the information which is representative of a light level reemitted by the body part to be checked further comprises measuring albedo, said measurement being obtained on the basis of the first print image.

3. Method according to Claim 1 or 2, **characterized in that**, when a plurality of LEDs are switched on simultaneously in order to obtain a second print image, the information which is representative of a light level reemitted by the body part to be checked is obtained and said information is compared to reference information for each sub-part in order to confirm that the body part to be checked is a real body part.

4. Method according to any one of the preceding claims, **characterized in that**, when a plurality of second print images are obtained, the second type of lighting is modified for each second print image and the information which is representative of a light level reemitted by the body part to be checked is obtained and said information is compared to reference information for each second print image in order to confirm that the body part to be checked is a real body part.

5. Method according to Claim 4, **characterized in that** modifying the second type of lighting consists in varying the wavelength emitted by the lighting system or the position of each LED which is switched on of the lighting system for each second print image.

6. Method according to any one of the preceding claims, **characterized in that**, prior to acquiring each second image, the method comprises choosing at least one LED to switch on in order to acquire each second image following a first predefined criterion using the first image.

7. Method according to Claim 6, **characterized in that** the method further comprises locating the finger in the first image and choosing each LED to switch on in accordance with the position of the finger thus located.

8. Method according to Claim 6 or 7, **characterized in that**, when a boundary separating two areas is detected in the first print image, a first second print image is acquired by lighting the body part with a first LED generating a sub-part reflecting light on a first side of the boundary and a second second print image is acquired by lighting the body part with a second LED generating a sub-part reflecting light on a second side of the boundary, and the information which is representative of a light level reemitted by the body part to be checked and originates from each second image must be similar following a second predefined criterion in order to confirm that the body part to be checked is a real body part.

9. Method according to Claim 8, **characterized in that**, when a single LED is chosen, the LED chosen is the LED which is closest to a position of a centre of mass of the body part in contact with the transparent slide or closest to a centre of curvature of the ridges of the print of the body part in contact with the transparent slide, or closest to a centre of mass of minutiae detected in the ridges of said print.

10. Method according to any one of the preceding claims, **characterized in that** the method further comprises:

   acquiring an additional print image without lighting by the light source;
   subtracting the additional print image from the first and from each second image so that the first and each second print image used when obtaining the information which is representative of a light level reemitted by the body part to be checked and comparing said information with reference information are images originating from this subtraction.

11. Device comprising means for implementing the method according to any one of Claims 1 to 10.

12. Equipment comprising a device according to Claim 11.

13. Computer program, **characterized in that** it comprises instructions for a device to implement the method according to any one of Claims 1 to 10, when said program is executed by a computing unit of said device.

Fig. 1

Fig. 2

Fig. 3

Fig. 4A

Fig. 4B

121B

124

121C

121A

121D

121F

121E

Fig. 4C

D

500C

500

500A

$\alpha_A$  $\alpha_A$

500D

50

500B

501B

502

Fig. 5

61 ⟿ Acquisition première image

62 ⟿ Choix position DEL

63 ⟿ Acquisition seconde(s) image(s)

64 ⟿ Acquisition image d'empreinte sans éclairage

65 ⟿ Soustraction

67 ⟿ Obtention info de niveau de lumière réémis par le doigt

68 ⟿ Validation

Fig. 6

```
111          112          113
CPU          RAM          ROM
                                        ⟿ 11

110
        HDD          COM
        114          115
```

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3015728
- FR 2757974
- EP 3073416 A